# FASCICULE DE BREVET EUROPEEN

(11) **EP 3 600 647 B1**
(45) Date de publication et mention de la délivrance du brevet: **14.07.2021**
(21) Numéro de dépôt: 18719055.8
(22) Date de dépôt: 22.03.2018
(51) Int. Cl.: B01J 19/26, B05B 1/26, B05B 7/00, B01J 4/00, C10G 11/18

(54) **DISPOSITIF D'INJECTION DE CHARGE AMELIORE POUR UNE UNITE FCC**
VERBESSERTE LADUNGSINJEKTIONSVORRICHTUNG FÜR EINE FCC-EINHEIT
IMPROVED CHARGE INJECTION DEVICE FOR AN FCC UNIT

(30) Priorité: 24.03.2017 FR 1752497
(43) Date de publication de la demande: 05.02.2020
(73) Titulaire: Total Raffinage Chimie, 92400 Courbevoie (FR)
(72) Inventeur: LESAGE, Romain, 2000 Antwerpen (BE); DECKER, Sébastien, 76930 Octeville sur Mer (FR); RABOIN, Jean-Christophe, 41600 Chaumont Sur Tharonne (FR); KERNEUR, Youen, 76620 Le Havre (FR)
(74) Mandataire: Kerneur, Youen
(86) Numéro de dépôt international: PCT/EP2018/057341
(87) Numéro de publication internationale: WO 2018/172474

(56) Documents cités:
- WO-A1-01/14500
- WO-A1-2015/073133
- US-A- 5 921 472
- US-A1- 2015 024 297
- PRASHANTA DUTTA ET AL: "Effect of baffle size, perforation, and orientation on internal heat transfer enhancement", INTERNATIONAL JOURNAL OF HEAT AND MASS TRANSFER., vol. 41, no. 19, 1 octobre 1998 (1998-10-01), pages 3005-3013, XP055479452, GB ISSN: 0017-9310, DOI: 10.1016/S0017-9310(98)00016-7

## Description

La présente invention se rapporte à un dispositif d'injection, notamment un dispositif d'injection de charge d'hydrocarbures d'une unité de raffinage, en particulier une unité de craquage catalytique fluide (FCC « Fluid Catalytic Cracking » en anglais).

Les charges d'hydrocarbures liquides traitées dans les unités de raffinage sont généralement mises en contact avec un catalyseur solide qui va favoriser la ou les réactions chimiques de traitement de la charge. Afin d'améliorer ce contact et de maximiser le rendement des réactions, ces charges d'hydrocarbures liquides sont atomisées en fines gouttelettes par des dispositifs d'injection. Cette d'atomisation permet de maximiser la surface de contact liquide (charge d'hydrocarbures liquide) - solide (catalyseur), ce qui favorise le transfert de chaleur et donc la vaporisation des ces hydrocarbures qui réagissent en phase gazeuse. Bien qu'il n'existe pas de réel consensus concernant le diamètre optimum des gouttelettes, on recherche en général à former des gouttelettes dont le diamètre est du même ordre de grandeur que le diamètre des particules de catalyseur, à savoir moins de 200 microns, par exemple de l'ordre de 50 à 80 microns.

De manière générale, on utilise des dispositifs d'injection dits « diphasiques », lesquels présentent un corps cylindrique creux et deux ouvertures d'entrée par lesquelles on injecte respectivement la charge d'hydrocarbures liquide et un gaz d'atomisation, généralement de la vapeur d'eau, à l'intérieur dudit corps. Une chambre de contact est ménagée à l'intérieur du corps, dans laquelle on met en contact la charge d'hydrocarbures et le gaz d'atomisation pour atomiser la charge d'hydrocarbures. Une fois atomisée, la charge d'hydrocarbures est éjectée via une ouverture de sortie débouchant à l'intérieur du réacteur. Chaque dispositif d'injection est implanté sur une paroi de réacteur de manière à ce qu'une extrémité du dispositif d'injection comprenant l'ouverture de sortie soit située à l'intérieur du réacteur.

On connait notamment des dispositifs d'injection à impact dans lesquels la charge est introduite radialement et impacte une cible située au centre du corps, engendrant la formation de gouttelettes. Un gaz d'atomisation circulant axialement permet d'entrainer ces gouttelettes en les divisant davantage vers la sortie du corps. On peut néanmoins observer un phénomène d'érosion de la cible, notamment lorsque la charge à injecter contient des particules, ce qui implique de renforcer la cible, augmentant davantage le coût.

Dans certains dispositifs d'injection, du gaz d'atomisation supplémentaire peut être injecté à l'intérieur du corps par un conduit entourant la cible : le gaz d'atomisation sort alors au niveau de la cible et vient impacter le liquide introduit par l'ouverture située en regard de la cible, favorisant l'atomisation du jet de liquide qu'il vient heurter frontalement.

La chambre de mélange de ces dispositifs d'injection à double injection de gaz d'atomisation est néanmoins complexe et coûteuse à réaliser. Elle doit ainsi être réalisée séparément, puis solidarisée au corps creux du dispositif d'injection.

US 5 921 472 divulgue un dispositif d'injection conformé pour atomiser un liquide en gouttelettes au moyen d'un gaz comprenant un élément d'atomisation.

WO01/14500 divulgue un injecteur d'atomisation comprenant une chicane formée d'une barre transversale qui ne s'étend que sur une partie de la périphérie de la paroi interne.

WO 2015/073133 divulgue un injecteur d'atomisation avec une chicane qui s'étend sur toute le périphérie du corps de l'injecteur.

L'invention vise à pallier au moins en partie les inconvénients mentionnés ci-dessus. A cet effet, il est proposé un dispositif d'injection conformé pour atomiser un liquide en gouttelettes au moyen d'un gaz, selon les revendications, comprenant :
- un corps tubulaire creux s'étendant suivant une direction longitudinale et dont une paroi interne définit une première zone dite de contact et une deuxième zone située en aval de la première zone par rapport à un sens de circulation du liquide et du gaz à l'intérieur du corps,
- un premier élément d'introduction de gaz pour introduire un gaz à l'intérieur de la première zone suivant la direction longitudinale, ledit élément d'introduction de gaz étant monté sur une première ouverture du corps, à une extrémité de celui-ci suivant la direction longitudinale,
- un deuxième élément d'introduction de liquide pour introduire un liquide à l'intérieur de la première zone suivant une direction perpendiculaire à la direction longitudinale, monté sur une deuxième ouverture du corps proche de la première ouverture,

- un élément d'atomisation monté sur une troisième ouverture du corps située en regard de la deuxième ouverture, comprenant :
   - une conduite tubulaire d'amenée de gaz à l'intérieur de la première zone située en regard de l'élément d'introduction de liquide, et
   - une cible située au centre de la conduite,
      la conduite et la cible s'étendant suivant une direction perpendiculaire à la direction longitudinale, la cible présentant une surface d'impact à une extrémité de la conduite débouchant à l'intérieur de la première zone, dans l'alignement du premier élément d'introduction de gaz,
   - un élément d'extrémité comprenant au moins un orifice de sortie pour l'évacuation du liquide atomisé monté à une extrémité du corps opposée (suivant la direction longitudinale) à la première ouverture d'entrée de gaz.

Selon l'invention, le corps présente une section interne variant de manière continue ou constante sur toute sa longueur et sa paroi interne du corps est pourvue, entre la première et la deuxième zone, d'au moins une chicane faisant saillie de la paroi interne vers l'intérieur du corps.

De manière usuelle, une chicane est un dispositif qui contrarie le cheminement d'un fluide en mouvement. L'agencement particulier de l'invention permet de réaliser le corps de manière très simple sans nuire à la qualité d'atomisation du dispositif d'injection.

Le corps présente une section interne variant de manière continue, autrement dit sans variation brusque et sans épaulement. Le corps peut ainsi présenter une forme tronconique ou similaire. De préférence, le corps présente une section interne constante. Il peut s'agir par exemple d'un cylindre ou similaire.

Le corps peut avantageusement être réalisé d'une seule pièce.

L'élément d'extrémité peut éventuellement être réalisé d'une pièce avec le corps.

Dans un premier mode de réalisation, ne faisant pas parti de l'invention, ladite au moins une chicane peut être conformée de sorte que, dans chaque plan perpendiculaire à la direction longitudinale du corps contenant ladite chicane, celle-ci s'étend sur toute la périphérie de la paroi interne. La ou les chicanes peuvent alors réalisées de manière simple. Une chicane peut alors se présenter sous la forme d'un simple anneau. Avantageusement, une seule chicane peut être prévue. Un tel agencement peut néanmoins engendrer une perte de charge, ce qui peut s'avérer problématique pour le traitement de charges lourdes, de plus en plus utilisées. En effet, l'atomisation de charges lourdes entraine une perte de charge importante au niveau des injecteurs, ce qui a pour conséquence d'augmenter la pression de la charge alimentant les injecteurs. Il faut alors utiliser des pompes puissantes et coûteuses pour atteindre les pressions souhaitées en sortie d'injecteur. On a donc intérêt à limiter la perte de charge engendrée par le système d'injection. Selon les configurations des dispositifs d'injection diphasiques, il peut en outre s'avérer nécessaire d'augmenter de manière considérable le débit de gaz d'atomisation pour atomiser des charges lourdes.

Afin de remédier à cet inconvénient, dans un deuxième mode de réalisation, correspondant à l'invention, ladite au moins une chicane peut être conformée de sorte que, dans chaque plan perpendiculaire à la direction longitudinale du corps contenant ladite chicane, celle-ci s'étend sur une partie seulement de la périphérie de la paroi interne.

Ainsi, dans chaque plan perpendiculaire à la direction longitudinale du corps, chaque chicane réduit la surface passante du corps uniquement sur une partie de sa périphérie de sorte que la perte de charge est inférieure à la perte de charge dans le cas où une chicane s'étend sur toute la périphérie de la paroi interne.

Par surface passante, on entend la surface interne au corps, non occupée par un élément et au travers de laquelle peut circuler le fluide.

Avantageusement, ladite au moins une chicane est conformée de sorte que le projeté orthogonal de la chicane sur un plan perpendiculaire à la direction longitudinale du corps s'étend sur une partie seulement de la périphérie de la paroi interne dans ledit plan de projection. Ceci permet de réduire davantage la perte de charge malgré la présence de chicane(s). A noter que lorsque plusieurs chicanes sont prévues, leurs projections dans un même plan orthogonal peuvent se recouvrir, voire s'étendre sur la totalité de la périphérie de la paroi interne.

En variante ou en combinaison, ladite au moins une chicane peut être conformée de sorte que le projeté orthogonal d'au moins une chicane sur un plan perpendiculaire à la direction longitudinale du corps peut s'étendre sur toute la périphérie de la paroi interne dans ledit plan de projection, éventuellement avec recouvrement.

Dans le deuxième mode de réalisation, ladite au moins une chicane peut définir une paroi dont un bord est solidarisé à la paroi interne le long d'un segment d'une courbe, notamment d'une courbe hélicoïdale.

En variante, quel que soit le mode de réalisation, ladite au moins une chicane peut définir une paroi dont un bord est solidarisé à la paroi interne le long d'une ligne s'étendant dans un plan perpendiculaire à la direction longitudinale dudit corps.

Quel que soit les modes de réalisation précédemment décrits, ladite au moins une chicane peut définir une paroi dont un bord est solidarisé à la paroi interne.

La paroi définie par ladite au moins une chicane peut présenter un bord libre distant de la paroi interne dentelé ou crénelé. En variante ou en combinaison, la paroi de ladite au moins une chicane peut présenter des orifices la traversant de part en part, notamment suivant une direction parallèle ou sensiblement parallèle à la direction longitudinale du corps.

En variante, ladite au moins une chicane peut s'étendre sur une longueur, suivant la direction longitudinale, au moins égale à une dimension interne maximale du corps mesurée perpendiculairement à la direction longitudinale. Cette chicane, appelée « chicane longue » par la suite, peut par exemple se présenter sous la forme d'une plaque épousant la paroi interne du corps à laquelle elle est solidarisée. Avantageusement, la chicane longue peut présenter un profil (en section longitudinale) irrégulier, notamment ondulé ou dentelé, suivant la direction longitudinale du corps. Cet agencement peut permettre d'améliorer la dispersion du flux en aval de la chicane. Pour des raisons d'encombrement, lorsque plusieurs chicanes longues sont prévues, il s'agit de préférence de chicanes espacées angulairement les unes des autres et non de chicanes espacées longitudinalement tel que décrit plus bas.

Quel que soit le mode de réalisation, ladite paroi interne peut être pourvue d'une pluralité de chicanes disjointes, notamment deux ou plus. Ceci permet de faciliter le mélange des fluides sans pour autant augmenter la perte de charge. Notamment, ces chicanes peuvent être réparties, en particulier régulièrement, sur la périphérie de la paroi interne pour un meilleur mélange sans augmentation de la perte de charge.

Les caractéristiques ci-après permettent également d'améliorer le mélange entre le liquide et le gaz sans augmenter de manière notable la perte de charge.

Ainsi, lorsque plusieurs chicanes sont présentes, chaque chicane peut avantageusement être espacée d'au moins une autre chicane suivant la direction longitudinale du corps (hormis pour des chicanes longues).

Dans ce cas, les chicanes peuvent alors s'étendre sur une longueur du corps relativement réduite.

Dans le cas du deuxième mode de réalisation, lorsque plusieurs chicanes espacées sont présentes, chaque chicane peut en outre être décalée angulairement par rapport aux autres chicanes par rotation autour d'un axe parallèle à, ou confondu avec, ladite direction longitudinale. En particulier, le projeté orthogonal des chicanes sur un plan perpendiculaire à la direction longitudinale du corps peut s'étendre sur toute la périphérie de la paroi interne. Dans ce plan de projection, il peut y avoir recouvrement des projections des chicanes ou, de préférence, juxtaposition, les chicanes étant alors disposées en quinconce.

Plusieurs chicanes (non longues) adjacentes, notamment espacées longitudinalement, peuvent présenter des hauteurs, mesurées perpendiculairement à la direction longitudinale du corps, non nulles et différentes. Ceci peut permettre d'améliorer la dispersion du fluide.

Notamment, suivant la direction longitudinale du corps, les hauteurs de chicanes adjacentes peuvent alors être croissantes jusqu'à atteindre un maximum et à décroitre.

Quel que soit le mode de réalisation, la paroi définie par chaque chicane peut être une paroi plane, simple à réaliser, ou encore une paroi incurvée.

Ladite au moins une chicane peut ainsi présenter, du côté des ouvertures d'entrée, une face incurvée agencée pour diriger un fluide impactant cette face vers l'intérieur du corps, ce qui peut permettre d'améliorer le mélange. Une telle face incurvée peut être prévue également pour une chicane longue.

Notamment, plusieurs chicanes (y compris des chicanes longues) présentant une face incurvée peuvent être agencées les unes par rapport aux autres afin d'impartir au fluide impactant sur leur face incurvée un même mouvement de rotation autour d'un axe parallèle à la direction longitudinale du corps.

Quelle que soit sa forme (incurvée ou plane), une chicane (ou sa tangente en son point de jonction avec la paroi interne du corps) peut définir un angle prédéterminé par rapport à un plan orthogonal à la direction longitudinale du corps. Cet angle peut être variable pour une même chicane.

Quelle que soit la forme (incurvée ou plane) d'une chicane, son bord libre (opposé à son bord solidaire de la paroi interne du corps) peut présenter une ou deux faces de forme arrondie ou en biseau.

De manière générale, la ou les chicanes peuvent présenter une hauteur, mesurée perpendiculairement à la direction longitudinale du corps, non nulle. Avantageusement, cette hauteur est égale au plus à 1/2 de la dimension interne maximale du corps perpendiculairement à la direction longitudinale du corps. De préférence cette hauteur est égale au plus à 1/4 de la dimension interne maximale du corps, voire à 1/8^{ème} de cette dimension maximale, par exemple de l'ordre de 1/10^{ème} de cette dimension maximale. Cette hauteur peut en outre être variable pour une même chicane.

De manière générale, la ou les chicanes peuvent présenter une épaisseur, mesurée suivant la direction longitudinale du corps, non nulle. Avantageusement, cette épaisseur est d'au plus 35mm, de préférence d'au plus 31mm, voire d'au plus 20mm ou d'au plus 16mm. Cette épaisseur peut par exemple être de l'ordre de 10mm.

L'invention est maintenant décrite en référence aux dessins annexés, non limitatifs, dans lesquels :
- la figure 1 illustre une représentation schématique en coupe longitudinale d'un dispositif d'injection selon un mode de réalisation de l'invention ;
- la figure 2a est une vue en coupe selon la ligne AA d'une chicane de la figure 1 selon un mode de réalisation ;
- les figures 2b et 2c sont des vues en coupe selon les lignes AA et BB respectivement de la figure 1 selon un autre mode de réalisation ;
- la figure 2d est une projection orthogonale dans un plan perpendiculaire à la direction longitudinale X des chicanes du dispositif d'injection de la figure 1 selon une variante de réalisation ;
- les figures 2e, 2f et 2g sont des vues en coupe similaires à celles de la figure 2a selon d'autres modes de réalisation ;
- la figure 3 représente partiellement une coupe longitudinale d'un dispositif d'injection selon une autre variante ;
- la figure 4 représente partiellement en perspective la paroi interne ouverte d'un dispositif d'injection selon une autre variante ;
- la figure 5 représente une vue de plusieurs chicanes suivant l'axe longitudinal X selon une autre variante ;
- la figure 6 représente une vue suivant l'axe longitudinal X selon une autre variante d'une seule et même chicane, ainsi que les vues en coupe suivant deux directions distinctes A'A et B'B perpendiculaires à la direction longitudinale ;
- les figures 7 et 8 représentent partiellement des vues en coupe longitudinale de chicanes présentant des bords libres de formes différentes ;
- les figures 9 et 10 représentent partiellement des coupes longitudinales d'un dispositif d'injection selon d'autres variantes.

Sur les différentes figures, les éléments identiques portent les mêmes références.

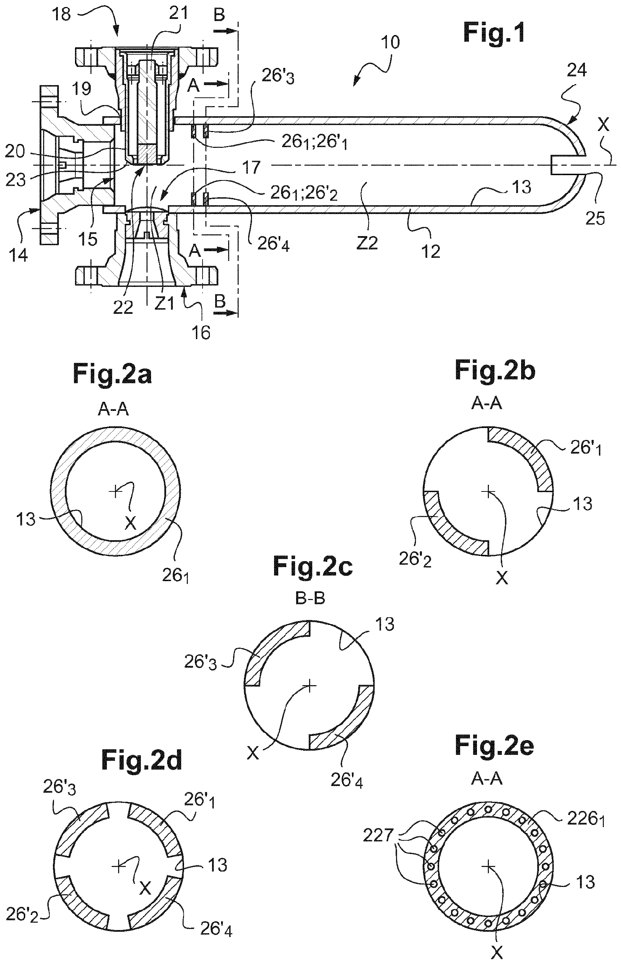

La figure 1 représente schématiquement un dispositif d'injection 10 lequel présente un corps tubulaire creux 12 s'étendant suivant une direction longitudinale X.

Le corps 12 comporte une paroi interne 13 laquelle définit une première zone Zl dite de contact et une deuxième zone Z2 située en aval de la première zone Z1 par rapport à un sens de circulation du liquide et du gaz à l'intérieur du corps (ici de gauche à droite sur la figure 1).

Le dispositif d'injection 10 présente en outre :
- un premier élément 14 d'introduction de gaz pour introduire un gaz à l'intérieur de la première zone Zl suivant la direction longitudinale X, cet élément d'introduction de gaz 14 étant monté sur une première ouverture 15 du corps, à une extrémité de celui-ci suivant la direction longitudinale X,
- un deuxième élément 16 d'introduction de liquide pour introduire un liquide à l'intérieur de la première zone Zl suivant une direction perpendiculaire à la direction longitudinale X, monté sur une deuxième ouverture 17 du corps proche de la première ouverture 15,
- un élément d'atomisation 18 monté sur une troisième ouverture 19 du corps située en regard de la deuxième ouverture 17, comprenant :
- une conduite tubulaire 20 d'amenée de gaz à l'intérieur de la première zone Z1, située en regard de l'élément d'introduction de liquide 16, et
- une cible 21 située au centre de la conduite 20,
la conduite 20 et la cible 21 s'étendent suivant une direction perpendiculaire à la direction longitudinale X, la cible 21 présentant une surface d'impact 22 à une extrémité 23 de la conduite débouchant à l'intérieur de la première zone Zl, dans l'alignement du premier élément d'introduction de gaz 16,
- un élément d'extrémité 24 comprenant au moins un orifice 25 de sortie pour l'évacuation du liquide atomisé monté à une extrémité du corps opposée à la première ouverture d'entrée de gaz 15.

L'élément d'extrémité 24 est ainsi situé en aval des zones Zl, Z2.

Les ouvertures 15, 17, 19 du corps 12 débouchent à l'intérieur de la première zone Zl, également appelée chambre de contact.

A l'intérieur du corps 12, les fluides circulent des ouvertures d'entrée 15, 17, 19 vers l'orifice de sortie 25.

Le dispositif d'injection 10 représenté sur la figure 1 est communément appelé de type à « impact».

Ici, la première zone Zl et la deuxième zone Z2 se présentent sous la forme d'une conduite interne rectiligne reliant la première ouverture d'entrée 15 à l'orifice de sortie 25 suivant une direction axiale dudit corps. Cette conduite interne présente dans cet exemple un diamètre interne constant. L'invention n'est toutefois pas limitée par ce mode de réalisation. La section interne de cette conduite (autrement dit du corps) pourrait varier de manière continue ou être constante sur toute la longueur de la conduite (ie du corps), sans toutefois être circulaire.

Dans le mode de réalisation représenté, le corps 12 est un cylindre, autrement dit, la paroi interne 13 est ici cylindrique, d'axe confondu avec la direction longitudinale X du corps.

Le liquide issu de l'élément d'introduction 16 est projeté contre la surface d'impact 22 de la cible 21 dès son entrée dans la première zone Zl. Le jet de liquide éclate et est emporté sous forme de gouttelettes par un courant de gaz d'atomisation introduit à haute vitesse par l'élément d'introduction de gaz 14. L'atomisation du liquide s'effectue en deux fois. Une première partie de l'atomisation se produit au niveau de la cible 21 par un impact du jet de liquide sur la surface d'impact 22 de la cible 21. Le jet de liquide ainsi éclaté est cisaillé par le gaz entrant par la conduite 20 et par le gaz introduit par le premier élément 14 d'introduction de gaz. La deuxième partie de l'atomisation se produit au niveau de l'orifice de sortie 25 de diamètre réduit, où le rétrécissement du diamètre accélère les fluides.

Selon l'invention, la paroi interne 13 du corps est en outre pourvue entre la première zone Zl et la deuxième zone Z2, d'au moins une chicane 26ᵢ (où i, le nombre de chicanes, est un nombre entier non nul). Cette chicane réduisant localement le diamètre de la paroi interne 13, perturbe le mouvement du fluide, favorisant le mélange. Notamment, la présence de chicane permet d'éviter la formation d'un film de liquide sur la paroi en ramenant le liquide dans l'axe du flux de gaz.

Une ou plusieurs chicanes peuvent être prévues.

Le dispositif d'injection 10 peut ainsi comprendre une unique chicane 26₁, représentée figure 2a, située au niveau de la ligne de coupe A-A de la figure 1. Cette chicane 26₁ se présente sous la forme d'un anneau plein s'étendant sur toute la périphérie de la paroi interne 13. Ici, la chicane 26₁ définit une paroi s'étendant perpendiculairement à la direction longitudinale X.

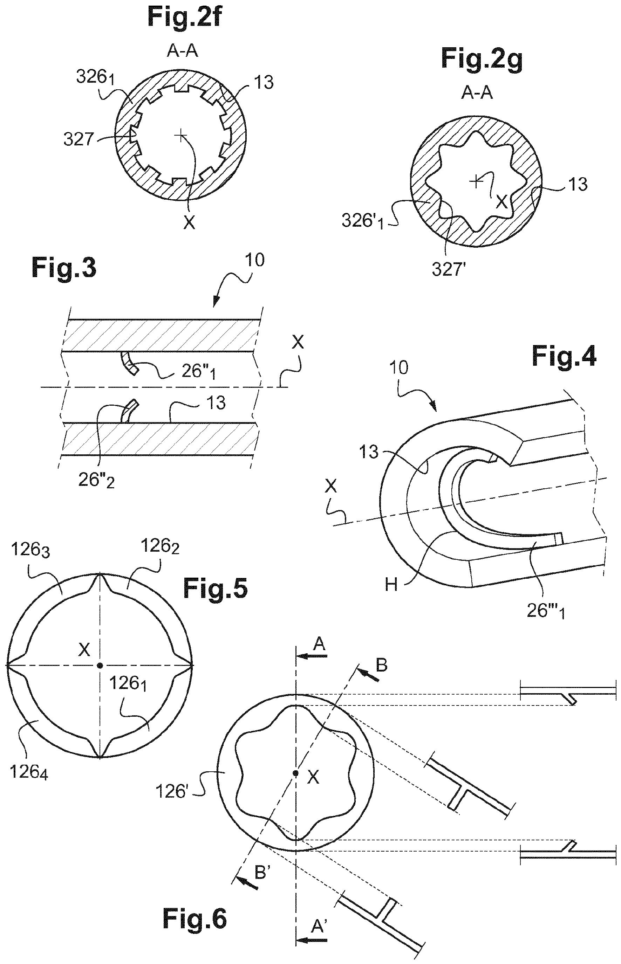

Les figures 2 à 10 représentent d'autres modes de réalisation qui diffèrent de ceux précédemment décrits par le nombre et/ou la forme des chicanes. Sur ces figures, les chicanes sont désignées par la référence « 26 » ou « 126 », l'indice « i », nombre entier non nul, représentant le nombre de chicanes, les signes prime ('), double prime ("), triple prime ('") désignant des modes de réalisation différents de ceux précédemment décrits.

Les figures 2b et 2c sont des vues en coupe de chicanes selon un autre mode de réalisation, dans lequel chaque chicane 26'_{¡} est conformée de sorte que, dans chaque plan perpendiculaire à la direction longitudinale X du corps contenant cette chicane, celle-ci s'étend sur une partie seulement de la périphérie de la paroi interne.

Dans cet exemple, quatre chicanes 26'₁, 26'₂, 26'₃, 26'₄ disjointes sont prévues.

On notera ici que chaque chicane 26'₁, 26'₂, 26'₃, 26'₄ est conformée de sorte que le projeté orthogonal de la chicane sur un plan perpendiculaire à la direction longitudinale du corps s'étend sur une partie seulement de la périphérie de la paroi interne dans ledit plan de projection (voir figures 2b, 2c). Autrement dit, la vue de ce plan de projection est similaire à la figure 2a.

Deux chicanes 26'₁, 26'₂, s'étendent ici dans un même plan perpendiculaire à la direction longitudinale X, les deux autres chicanes 26'₃, 26'₄ s'étendant dans un autre plan perpendiculaire, espacé du plan des chicanes suivant la direction longitudinale X (voir figure 1). L'invention n'est pas limitée par ce mode de réalisation, une ou plusieurs autres chicanes pourraient être dans un troisième plan distinct perpendiculaire à la direction longitudinale X ou dans encore d'autres plans distincts. En variante ou en combinaison, une seule chicane pourrait être prévue à chaque position particulière le long de la direction longitudinale X.

Les chicanes 26'₁, 26'₂, 26'₃, 26'₄ sont en outre décalées angulairement par rotation autour de la direction longitudinale X, tel que visible sur les figures 2b et 2c. On notera que ces chicanes sont en quinconce, leur projeté orthogonal sur un plan perpendiculaire à la direction longitudinale du corps s'étendant sur toute la périphérie de la paroi interne 13.

En variante, on pourrait prévoir que le projeté orthogonal de ces chicanes 26'ᵢ sur un plan perpendiculaire à la direction X ne s'étende pas sur la totalité de la périphérie de la paroi interne 13, mais sur une partie seulement, tel que représenté sur la figure 2d.

Dans une autre variante non représentée, on pourrait prévoir que le projeté orthogonal des chicanes sur un plan perpendiculaire à la direction X s'étende sur la totalité de la périphérie de la paroi interne 13, avec un recouvrement entre les projections des chicanes.

Ainsi, l'agencement relatif des chicanes peut être choisi de manière à perturber le plus possible le mouvement du fluide circulant à l'intérieur du dispositif d'injection, sans augmenter la perte de charge.

D'autres modes de réalisation sont décrits en référence aux figures 2e, 2f, 2g. Ils concernent des chicane perforées 226ᵢ ou présentant un bord libre ondulé ou crénelé (326ᵢ, 326'ᵢ).

La figure 2e est une vue en coupe d'une chicane 226₁ perforée. Des orifices 227 la traversent de part en part, permettant le passage du fluide. Autrement dit, les orifices s'étendent dans une direction parallèle ou sensiblement parallèle (avec un écart allant jusqu'à 20°) à l'axe du corps 12. Cet agencement permet d'améliorer la dispersion du fluide en aval de la chicane, perturbe moins l'écoulement du fluide, tout en recentrant celui-ci vers l'axe du corps 12.

Les figures 2f et 2g sont des vues en coupe d'une chicane selon un autre mode de réalisation, dans lequel la chicane 326₁, 326'₁ présente un bord libre 327, 327' respectivement, distant de la paroi interne 13, qui est soit dentelé (chicane 326₁), soit crénelé (chicane 326'₁). Ces agencements ont un effet similaire que celui de la figure 2e.

Les figures 2e-2g décrivent des variantes de réalisation de la chicane 20₁ des figures 2 et 2a. Les différentes chicanes représentées figures 2b-2d pourraient présenter des formes similaires. On peut aussi envisager de combiner des chicanes de différentes formes.

Dans l'exemple représenté figure 1, les chicanes se présentent sous la forme de parois planes perpendiculaires à la direction longitudinale X. Autrement dit, un bord de la paroi de chaque chicane est ainsi solidarisé à la paroi interne 13 le long d'une ligne s'étendant dans un plan perpendiculaire à la direction longitudinale dudit corps.

Les chicanes représentées figures 1 et 2a-2d définissent des parois planes perpendiculaires à la direction longitudinale X. Ces parois pourraient également être incurvées. Ainsi, la figure 3 représente partiellement en coupe axiale le dispositif d'injection 10 pourvu de chicanes 26"₁, 26"₂ incurvées, notamment en direction de l'axe central longitudinal du corps 12. Ici, la concavité de ces chicanes est orientée vers l'orifice de sortie 25. On pourrait néanmoins prévoir qu'elle soit orientée dans la direction opposée.

Dans ce mode de réalisation, chaque chicane 26"₁, 26"₂ définit une paroi dont un bord est solidarisé à la paroi interne 13 le long d'une ligne s'étendant dans un plan perpendiculaire à la direction longitudinale X. Bien que non représentées, d'autres chicanes 26"ᵢ espacées suivant X et/ou décalées angulairement pourraient être prévues.

La figure 4 représente partiellement en perspective la paroi 13 d'un dispositif d'injection 10 comprenant une chicane 26"'ᵢ qui définit une paroi dont un bord est solidarisé à la paroi interne 13 le long d'un segment d'une courbe hélicoïdale H. La chicane 26"'₁ peut définir une paroi plane ou incurvée, comme représenté figure 3.

Un ou plusieurs chicanes 26"'ᵢ peuvent être prévues, par exemple décalées angulairement et/ou espacées selon la direction longitudinale X. En outre, elles peuvent être agencées les unes par rapport aux autres afin d'impartir au fluide impactant sur leur face incurvée un même mouvement de rotation autour d'un axe parallèle à la direction longitudinale du corps.

Les chicanes précédemment décrites peuvent être réalisées d'une pièce avec le corps 12, par exemple par moulage ou usinage, ou être des éléments rapportés fixés, par exemple soudés, maintenus entre des brides, ou autre. Lorsque plusieurs chicanes sont présentes, elles peuvent être identiques ou différentes, les différentes formes et dispositions de chicanes précédemment décrites pouvant être combinées.

La ou les chicanes sont disposées entre les première et deuxième zones Z1, Z2. Typiquement, la deuxième zone a une longueur (suivant la direction longitudinale X) de 2 à 10 fois supérieure à la longueur de la première zone. La ou les chicanes, notamment la première chicane, peuvent être situées à une distance « 1 » de l'axe de la cible 20 ou des ouvertures 17, 19 inférieure au diamètre de la paroi interne 13, au niveau de la première zone, par exemple à une distance correspondant à ¾ de ce diamètre (pour des raisons de clarté, l'échelle n'est pas respectée sur les figures).

La ou les chicanes peuvent présenter une dimension radiale ou hauteur (perpendiculairement à la direction longitudinale X) relativement faible, par exemple inférieure à 1/8^{ème} du diamètre de la paroi interne 13, voire de l'ordre de 1/10^{ème} de ce diamètre. Cette hauteur peut être variable le long de la longueur d'une chicane, tel que représenté sur la figure 5, sur laquelle quatre chicanes 126₁, 126₂, 126₃, 126₄ sont représentées, dont la hauteur varie au niveau des extrémités ou encore sur les figures 2f, 2g.

L'épaisseur de chaque chicane, mesurée suivant la direction longitudinale X du corps, non nulle, est par exemple d'au plus 16 à 35mm.

On notera que, quelle que soit sa forme (incurvée ou plane), une chicane (ou sa tangente en son point de jonction avec la paroi interne 13 du corps) peut définir un angle prédéterminé par rapport à un plan orthogonal à la direction longitudinale du corps (voir fig.3, 6, 7(b) et 8(a)). Cet angle peut être variable pour une même chicane 126', tel que visible sur la figure 6.

La ou les chicanes ainsi inclinées peuvent être inclinées en direction de l'orifice de sortie 25.

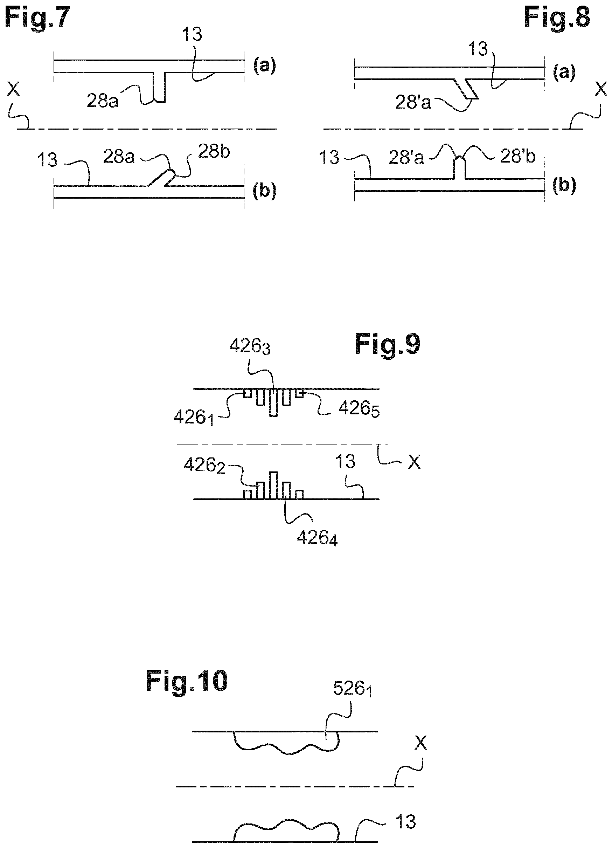

Quelle que soit sa forme (incurvée ou plane), le bord libre d'une chicane (opposé à son bord solidaire de la paroi interne du corps) peut présenter une face 28a de forme arrondie (fig. 7(a)), une face 28'a en biseau (fig.7(b)), deux faces 28a, 28b de formes arrondies (fig.8(a)) ou deux faces 28'a, 28'b en biseau (fig.8(b)).

Lorsqu'une seule face est prévue, elle est de préférence située du côté de la zone de mélange Zl suivant la direction longitudinale X.

D'autres modes de réalisation sont encore envisageables.

Le mode de réalisation de la figure 9 montre 5 chicanes adjacentes (426₁, 426₂, 426₂, 426₄, 426₅) espacées suivant la direction longitudinale X du corps 12. On notera que chaque chicane présente une hauteur constante (comme dans l'exemple de la figure 2a), mais que les chicanes adjacentes présentent des hauteurs différentes. Dans l'exemple, les hauteurs des chicanes sont croissantes jusqu'à atteindre un maximum et à décroitre. Bien entendu, le nombre de chicanes adjacentes pourrait être supérieur ou inférieur à 5.

Tel que déjà mentionné, l'épaisseur (ou longueur) des chicanes précédemment décrite est par exemple d'au plus 16 à 35mm.

On notera que la ou les chicanes décrites en référence aux figures 1, 2a-2g, et 3 à 8 définissent une paroi (plane ou non) dont la dimension suivant la direction longitudinale X est inférieure à la dimension suivant une direction perpendiculaire à la direction longitudinale.

Dans le mode de réalisation de la figure 10, la chicane ne définit plus une paroi dans la mesure où sa longueur (suivant la direction longitudinale X) est supérieure à sa dimension perpendiculairement à la direction longitudinale X. La paroi interne 13 représentée figure 10 est ainsi pourvue d'une chicane « longue » 526₁ s'étendant sur une longueur, suivant la direction longitudinale, au moins égale à une dimension interne maximale du corps mesurée perpendiculairement à la direction longitudinale, autrement dit, au diamètre interne du corps dans cet exemple. On notera en outre que la chicane 526₁ présente un profil irrégulier suivant la direction longitudinale du corps. Ainsi, sa hauteur est variable suivant la direction X. la forme de ce profil peut être adaptée : il peut être similaire au profil général des 5 chicanes de la figure 9 ou former des ondulations, tel que représenté sur la figure 10. En outre, la hauteur de la chicane pourrait également être variable dans chaque section transversale de la chicane.

Dans un mode de réalisation non représenté, deux ou plus chicanes longues espacées angulairement pourraient être prévues, s'étendant suivant une direction hélicoïdale ou rectiligne, présentant une face incurvée ou non.

Les différents modes de réalisation précédemment décrits peuvent être combinés et mis en œuvre indifféremment pour une ou plusieurs chicanes.

## Revendications

1. Dispositif d'injection (10) conformé pour atomiser un liquide en gouttelettes au moyen d'un gaz, comprenant
- un corps tubulaire creux (12) s'étendant suivant une direction longitudinale (X) et dont une paroi interne (13) définit une première zone dite de contact (Z1) et une deuxième zone (Z2) située en aval de la première zone par rapport à un sens de circulation du liquide et du gaz à l'intérieur du corps,
- un premier élément (14) d'introduction de gaz pour introduire un gaz à l'intérieur de la première zone (Z1) suivant la direction longitudinale, ledit élément d'introduction de gaz étant monté sur une première ouverture (15) du corps, à une extrémité de celui-ci suivant la direction longitudinale,
- un deuxième élément (16) d'introduction de liquide pour introduire un liquide à l'intérieur de la première zone (Z1) suivant une direction perpendiculaire à la direction longitudinale, monté sur une deuxième ouverture (17) du corps proche de la première ouverture,
- un élément d'atomisation (18) monté sur une troisième ouverture (19) du corps située en regard de la deuxième ouverture (17), comprenant :
- une conduite tubulaire (20) d'amenée de gaz à l'intérieur de la première zone (Z1) située en regard de l'élément d'introduction de liquide (16), et
- une cible (21) située au centre de la conduite,
la conduite et la cible s'étendant suivant une direction perpendiculaire à la direction longitudinale, la cible présentant une surface d'impact (22) à une extrémité (23) de la conduite débouchant à l'intérieur de la première zone (Z1), dans l'alignement du premier élément d'introduction de gaz (14),
- un élément d'extrémité (24) comprenant au moins un orifice de sortie (25) pour l'évacuation du liquide atomisé monté à une extrémité du corps opposée à la première ouverture d'entrée de gaz,
**caractérisé en ce que** le corps (12) présente une section interne variant de manière continue ou constante sur toute sa longueur et **en ce que** sa paroi interne (13) est pourvue, entre la première et la deuxième zone, d'au moins une chicane (26ᵢ, 26'ᵢ, 26"₁, 26"'ᵢ; 126, 126'ᵢ) faisant saillie de la paroi interne vers l'intérieur du corps, la ou les chicanes présentant une hauteur, mesurée perpendiculairement à la direction longitudinale du corps, non nulle, égale au moins à 1/10^{ème} et au plus à 1/4 de la dimension interne maximale du corps perpendiculairement à la direction longitudinale du corps et ladite au moins une chicane (26'ᵢ, 26"ᵢ, 26"'ᵢ) est conformée de sorte que, dans chaque plan perpendiculaire à la direction longitudinale du corps contenant ladite chicane, celle-ci s'étend sur une partie seulement de la périphérie de la paroi interne (13).

2. Dispositif d'injection (10) selon la revendication 1, **caractérisé en ce que** ladite au moins une chicane (26'ᵢ, 26"ᵢ, 26"'ᵢ) est choisie parmi :
- une chicane conformée de sorte que le projeté orthogonal de la chicane sur un plan perpendiculaire à la direction longitudinale du corps s'étend sur une partie seulement de la périphérie de la paroi interne (13) dans ledit plan de projection,
- une chicane conformée de sorte que le projeté orthogonal de la chicane sur un plan perpendiculaire à la direction longitudinale du corps s'étend sur toute la périphérie de la paroi interne (13) dans ledit plan de projection.

3. Dispositif d'injection (10) selon l'une quelconque des revendications 1 ou 2, **caractérisé en ce que** ladite au moins une chicane (26"'ᵢ) définit une paroi dont un bord est solidarisé à la paroi interne le long d'un segment d'une courbe, notamment d'une courbe hélicoïdale.

4. Dispositif d'injection (10) selon l'une quelconque des revendications 1 ou 2, **caractérisé en ce que** ladite au moins une chicane (26ᵢ, 26'ᵢ, 26"ᵢ) définit une paroi dont un bord est solidarisé à la paroi interne le long d'une ligne s'étendant dans un plan perpendiculaire à la direction longitudinale dudit corps.

5. Dispositif d'injection (10) selon l'une quelconque des revendications 1 à 4, **caractérisé en ce que** ladite au moins une chicane (226ᵢ, 326ᵢ, 326'ᵢ) définit une paroi dont un bord est solidarisé à la paroi interne et **en ce que** la paroi définie par ladite au moins une chicane (226ᵢ, 326'ᵢ, 326ᵢ) présente au moins une des caractéristiques suivantes :
- un bord libre (327, 327') dentelé ou crénelé distant de la paroi interne,
- des orifices (227) la traversant de part en part.

6. Dispositif d'injection (10) selon l'une quelconque des revendications 1 ou 2, **caractérisé en ce que** ladite au moins une chicane (526ᵢ) s'étend sur une longueur, suivant la direction longitudinale, au moins égale à une dimension interne maximale du corps mesurée perpendiculairement à la direction longitudinale, ladite chicane (520ᵢ) présentant optionnellement un profil irrégulier suivant la direction longitudinale du corps.

7. Dispositif d'injection (10) selon l'une quelconque des revendications 1 à 6, **caractérisé en ce que** ladite paroi interne (13) est pourvue d'une pluralité de chicanes disjointes.

8. Dispositif d'injection (10) selon la revendication 7 lorsqu'elle ne dépend pas de la revendication 8, **caractérisé en ce qu'**au moins une chicane (26'ᵢ, 26"ᵢ) est espacée d'au moins une autre chicane suivant la direction longitudinale du corps.

9. Dispositif d'injection (10) selon l'une quelconque des revendications 7 ou 8 lorsqu'elles dépendent de la revendication 3, **caractérisé en ce que** chaque chicane (26'ᵢ, 26"ᵢ) est décalée angulairement par rapport aux autres chicanes par rotation autour d'un axe parallèle à, ou confondu avec, ladite direction longitudinale (X).

10. Dispositif d'injection (10) selon la revendication 9, **caractérisé en ce que** le projeté orthogonal des chicanes (26'ᵢ) sur un plan perpendiculaire à la direction longitudinale du corps s'étend sur toute la périphérie de la paroi interne, avec un recouvrement ou une juxtaposition des projections.

11. Dispositif d'injection (10) selon l'une quelconque des revendications 7 à 10 lorsqu'elles ne dépendent pas de la revendication 6, **caractérisé en ce que** plusieurs chicanes adjacentes (426ᵢ) présentent des hauteurs, mesurées perpendiculairement à la direction longitudinale du corps, non nulles et différentes.

12. Dispositif d'injection (10) selon la revendication 11, **caractérisé en ce que**, suivant la direction longitudinale du corps, les hauteurs de chicanes adjacentes (426ᵢ) sont croissantes jusqu'à atteindre un maximum et à décroitre.

13. Dispositif d'injection (10) selon l'une quelconque des revendications 1 à 12, **caractérisé en ce que** ladite au moins une chicane (26"ᵢ) présente, du côté des ouvertures d'entrée, une face incurvée agencée pour diriger un fluide impactant la face vers l'intérieur du corps.

14. Dispositif d'injection (10) selon la revendication 13, **caractérisé en ce que** plusieurs chicanes présentant une face incurvée sont agencées les unes par rapport aux autres afin d'impartir au fluide impactant sur leur face incurvée un même mouvement de rotation autour d'un axe parallèle à la direction longitudinale du corps.

15. Dispositif d'injection (10) selon l'une quelconque des revendications 1 à 14, **caractérisé en ce que** la ou les chicanes (26ᵢ, 26'ᵢ, 26"ᵢ, 26"'ᵢ, 126ᵢ, 126'ᵢ, 226ᵢ, 326ᵢ, 326'ᵢ, 426ᵢ, 526ᵢ) présentent une hauteur, mesurée perpendiculairement à la direction longitudinale du corps, égale au plus à 1/8^{ème} de cette dimension interne maximale.

## Patentansprüche

1. Injektionsvorrichtung (10), die ausgebildet ist, um eine Flüssigkeit mittels eines Gases in Tröpfchen zu zerstäuben, die umfasst
- einen hohlen rohrförmigen Körper (12), der sich entlang einer Längsrichtung (X) erstreckt, und von dem eine Innenwand (13) eine erste sogenannte Kontaktzone (Z1) und eine zweite Zone (Z2), die stromabwärts der ersten Zone in Bezug auf eine Zirkulationsrichtung der Flüssigkeit und des Gases in dem Inneren des Körpers liegt, definiert,
- ein erstes Gaseinleitungselement (14) zum Einleiten von Gas in das Innere der ersten Zone (Z1) entlang der Längsrichtung, wobei das Gaseinleitungselement auf einer ersten Öffnung (15) des Körpers an dessen einem Ende entlang der Längsrichtung montiert ist,
- ein zweites Flüssigkeitseinleitungselement (16) zum Einleiten einer Flüssigkeit in das Innere der ersten Zone (Z1) entlang einer Richtung senkrecht zu der Längsrichtung, das auf einer zweiten Öffnung (17) des Körpers nahe der ersten Öffnung montiert ist,
- ein Zerstäubungselement (18), das auf einer dritten Öffnung (19) des Körpers angebracht ist, die gegenüber der zweiten Öffnung (17) liegt, das umfasst:
- eine röhrenförmige Leitung (20) zum Zuführen von Gas in das Innere der ersten Zone (Z1), die gegenüber dem Flüssigkeitseinleitungselement (16) liegt ist, und
- ein Ziel (21), das in der Mitte der Leitung liegt, wobei sich die Leitung und das Ziel entlang einer Richtung senkrecht zu der Längsrichtung erstrecken, wobei das Ziel eine Aufpralloberfläche (22) an einem Ende (23) der Leitung aufweist, das in das Innere der ersten Zone (Z1) in der Ausrichtung mit dem ersten Gaseinleitungselement (14) mündet,
- ein Endelement (24), das mindestens eine Austrittsöffnung (25) zur Ableitung der zerstäubten Flüssigkeit umfasst, das an einem Ende des Körpers, der ersten Gaseintrittsöffnung entgegengesetzt, montiert ist,
**dadurch gekennzeichnet, dass** der Körper (12) einen Innenschnitt aufweist, der kontinuierlich oder konstant auf seiner gesamten Länge variiert, und dass seine Innenwand (13) zwischen der ersten und der zweiten Zone mit mindestens einem Leitblech (26ᵢ, 26'ᵢ, 26"ᵢ, 26"'ᵢ; 126, 126'ᵢ) versehen ist, das von der Innenwand zu dem Inneren des Körpers vorragt, wobei das oder die Leitbleche eine Höhe senkrecht zu der Längsrichtung des Körpers gemessen von ungleich Null, mindestens gleich 1/10 und höchstens 1/4 der maximalen Innenabmessung des Körpers senkrecht zu der Längsrichtung des Körpers aufweisen, und das mindestens eine Leitblech (26'ᵢ, 26"ᵢ, 26"'ᵢ) derart ausgebildet ist, dass sich in jeder Ebene senkrecht zu der Längsrichtung des Körpers, die das Leitblech umfasst, dieses nur über einen Teil des Umfangs der Innenwand (13) erstreckt.

2. Injektionsvorrichtung (10) nach Anspruch 1, **dadurch gekennzeichnet, dass** das mindestens eine Leitblech (26'ᵢ, 26"ᵢ, 26"'ᵢ) ausgewählt ist aus:
- einem Leitblech, das derart ausgebildet ist, dass sich die orthogonale Projektion des Leitblechs auf einer Ebene senkrecht zu der Längsrichtung des Körpers nur über einen Teil des Umfangs der Innenwand (13) in der Projektionsebene erstreckt,
- einem Leitblech, das derart ausgebildet ist, dass sich die orthogonale Projektion des Leitblechs auf einer Ebene senkrecht zu der Längsrichtung des Körpers über den gesamten Umfang der Innenwand (13) in der Projektionsebene erstreckt.

3. Injektionsvorrichtung (10) nach einem der Ansprüche 1 oder 2, **dadurch gekennzeichnet, dass** das mindestens eine Leitblech (26"'ᵢ) eine Wand, von der ein Rand entlang eines Kurvensegments mit der Innenwand fest verbunden ist, insbesondere eine schraubenförmige Kurve, definiert.

4. Injektionsvorrichtung (10) nach einem der Ansprüche 1 oder 2, **dadurch gekennzeichnet, dass** das mindestens eine Leitblech (26ᵢ, 26'ᵢ, 26"ᵢ) eine Wand definiert, von der ein Rand mit der Innenwand entlang einer Linie, die sich in einer Ebene senkrecht zu der Längsrichtung des Körpers erstreckt, fest verbunden ist.

5. Injektionsvorrichtung (10) nach einem der Ansprüche 1 bis 4, **dadurch gekennzeichnet, dass** das mindestens eine Leitblech (226ᵢ, 326ᵢ, 326'ᵢ) eine Wand definiert, von der ein Rand mit der Innenwand fest verbunden ist, und dass die Wand, die von dem mindestens einen Leitblech (226ᵢ, 326'ᵢ, 326ᵢ) definiert ist, mindestens eines der folgenden Merkmale aufweist:
- einen gezahnten oder gerippten freien Rand (327, 327'), der von der Innenwand entfernt ist,
- Öffnungen (227), die sie von einer Seite zu der anderen durchqueren.

6. Injektionsvorrichtung (10) nach einem der Ansprüche 1 oder 2, **dadurch gekennzeichnet, dass** sich das mindestens eine Leitblech (526ᵢ) auf einer Länge entlang der Längsrichtung erstreckt, die mindestens gleich einem senkrecht in der Längsrichtung gemessenen maximalen Innenmaß des Körpers ist, wobei das Leitblech (520ᵢ) optional ein unregelmäßiges Profil entlang der Längsrichtung des Körpers aufweist.

7. Injektionsvorrichtung (10) nach einem der Ansprüche 1 bis 6, **dadurch gekennzeichnet, dass** die Innenwand (13) mit einer Vielzahl getrennter Leitbleche versehen ist.

8. Injektionsvorrichtung (10) nach Anspruch 7, wenn er nicht von Anspruch 8 abhängt, **dadurch gekennzeichnet, dass** mindestens ein Leitblech (26'ᵢ, 26"ᵢ) von mindestens einem anderen Leitblech entlang der Längsrichtung des Körpers beabstandet ist.

9. Injektionsvorrichtung (10) nach einem der Ansprüche 7 oder 8, wenn sie von Anspruch 3 abhängen, **dadurch gekennzeichnet, dass** jedes Leitblech (26'ᵢ, 26"ᵢ) winkelig in Bezug auf die anderen Leitbleche durch Drehung um eine Achse versetzt ist, die zu der Längsrichtung (X) parallel ist oder mit ihr zusammenfällt.

10. Injektionsvorrichtung (10) nach Anspruch 9, **dadurch gekennzeichnet, dass** sich die orthogonale Projektion der Leitbleche (26'ᵢ) auf einer Ebene senkrecht zu der Längsrichtung des Körpers auf dem gesamten Umfang der Innenwand mit einer Überlappung oder Nebeneinanderstellung der Projektionen erstreckt.

11. Injektionsvorrichtung (10) nach einem der Ansprüche 7 bis 10, wenn sie nicht von Anspruch 6 abhängen, **dadurch gekennzeichnet, dass** mehrere benachbarte Leitbleche (426ᵢ) Höhen, die senkrecht zu der Längsrichtung des Körpers gemessen sind, die ungleich Null und unterschiedlich sind, aufweisen.

12. Injektionsvorrichtung (10) nach Anspruch 11, **dadurch gekennzeichnet, dass** entlang der Längsrichtung des Körpers die Höhen benachbarter Leitbleche (426ᵢ) zunehmen, bis sie ein Maximum erreichen, und dann abnehmen.

13. Injektionsvorrichtung (10) nach einem der Ansprüche 1 bis 12, **dadurch gekennzeichnet, dass** das mindestens eine Leitblech (26"i) auf der Seite der Einlassöffnungen eine gekrümmte Fläche aufweist, die eingerichtet ist, um ein Fluid, das auf die Fläche aufprallt, zu dem Inneren des Körpers zu lenken.

14. Injektionsvorrichtung (10) nach Anspruch 13, **dadurch gekennzeichnet, dass** mehrere Leitbleche, die eine gekrümmte Fläche aufweisen, in Bezug zueinander eingerichtet sind, um dem Fluid, das auf ihre gekrümmte Fläche aufprallt, die gleiche Drehbewegung um eine Achse parallel zu der Längsrichtung des Körpers zu verleihen.

15. Injektionsvorrichtung (10) nach einem der Ansprüche 1 bis 14, **dadurch gekennzeichnet, dass** das oder die Leitbleche (26ᵢ, 26'ᵢ, 26"ᵢ, 26"'ᵢ, 126ᵢ, 126'ᵢ, 226ᵢ, 326ᵢ, 326'ᵢ, 426ᵢ, 526ᵢ) eine Höhe senkrecht zu der Längsrichtung des Körpers gemessen, die höchstens gleich 1/8 dieser maximalen Innenabmessung ist, aufweisen.

## Claims

1. An injection device (10) that is configured for atomising a liquid into droplets by means of a gas, comprising
- a hollow tubular body (12) extending in a longitudinal direction (X) and an inner wall (13) of which defines a first zone referred to as a contact zone (Z1) and a second zone (Z2) located downstream of the first zone following a direction of circulation of liquid and gas inside the body,
- a first gas introduction element (14) for introducing a gas into the first zone (Z1) in the longitudinal direction, said gas introduction element being mounted on a first opening (15) of the body, at one end thereof in the longitudinal direction,
- a second liquid introduction element (16) for introducing a liquid into the first zone (Z1) in a direction perpendicular to the longitudinal direction, mounted on a second opening (17) of the body near the first opening,
- an atomisation element (18) mounted on a third opening (19) of the body located opposite the second opening (17), comprising:
- a tubular pipe (20) for supplying gas into the first zone (Z1) located opposite the liquid introduction element (16), and
- a target (21) located at the centre of the pipe, the pipe and the target extending in a direction perpendicular to the longitudinal direction, the target having an impact surface (22) at one end (23) of the pipe opening into the first zone (Z1), in alignment with the first gas introduction element (14),
- an end member (24) comprising at least one outlet (25) for discharging the atomised liquid, mounted at one end of the body opposite the first gas inlet opening,
**characterised in that** the body (12) has an internal cross-section varying continuously or constantly over its entire length and **in that** its inner wall (13) is provided, between the first and the second zone, with at least one baffle (26ᵢ, 26'ᵢ, 26"ᵢ, 26"'ᵢ; 126, 126'ᵢ) projecting from the inner wall towards the interior of the body, the baffle(s) having a height, measured perpendicular to the longitudinal direction of the body, not equal to zero, equal to at least 1/10^{th} and at most 1/4 of the maximum internal dimension of the body perpendicular to the longitudinal direction of the body and said at least one baffle (26'ᵢ, 26"ᵢ, 26"'ᵢ) is configured so that, in each plane perpendicular to the longitudinal direction of the body containing said baffle, the latter extends over only a part of the periphery of the inner wall (13).

2. The injection device (10) according to claim 1, **characterised in that** said at least one baffle (26'ᵢ, 26"ᵢ, 26"'ᵢ) is selected from:
- a baffle configured so that the orthogonal projection of the baffle on a plane perpendicular to the longitudinal direction of the body extends over only a part of the periphery of the inner wall (13) in said plane of projection,
- a baffle configured so that the orthogonal projection of the baffle on a plane perpendicular to the longitudinal direction of the body extends over the entire periphery of the inner wall (13) in said plane of projection.

3. The injection device (10) according to any one of claims 1 or 2, **characterised in that** said at least one baffle (26"'ᵢ) defines a wall, one edge of which is secured to the inner wall along a segment of a curve, especially a helical curve.

4. The injection device (10) according to any one of claims 1 or 2, **characterised in that** said at least one baffle (26ᵢ, 26'ᵢ, 26"ᵢ) defines a wall, one edge of which is secured to the inner wall along a line extending in a plane perpendicular to the longitudinal direction of said body.

5. The injection device (10) according to any one of claims 1 to 4, **characterised in that** said at least one baffle (226ᵢ, 326ᵢ, 326'ᵢ) defines a wall, one edge of which is secured to the inner wall and **in that** the wall defined by said at least one baffle (226ᵢ, 326'ᵢ, 326ᵢ) has at least one of the following features:
- a serrated or crenellated free edge (327, 327') distant from the inner wall,
- openings (227) passing through it from one side to another.

6. The injection device (10) according to any one of claims 1 or 2, **characterised in that** said at least one baffle (526ᵢ) extends over a length, in the longitudinal direction, at least equal to a maximum internal dimension of the body measured perpendicular to the longitudinal direction, said baffle (520ᵢ) optionally having an irregular profile along the longitudinal direction of the body.

7. The injection device (10) according to any one of claims 1 to 6, **characterised in that** said inner wall (13) is provided with a plurality of disjointed baffles.

8. The injection device (10) according to claim 7 when it does not depend on claim 8, **characterised in that** at least one baffle (26'ᵢ, 26"ᵢ) is spaced from at least one other baffle in the longitudinal direction of the body.

9. The injection device (10) according to any one of claims 7 or 8 when dependent on claim 3, **characterised in that** each baffle (26'ᵢ, 26"ᵢ) is angularly offset with respect to the other baffles by rotation about an axis parallel to, or coincident with, said longitudinal direction (X).

10. The injection device (10) according to claim 9, **characterised in that** the orthogonal projection of the baffles (26'ᵢ) on a plane perpendicular to the longitudinal direction of the body extends over the entire periphery of the inner wall, with an overlap or juxtaposition of the projections.

11. The injection device (10) according to any one of claims 7 to 10 when they do not depend on claim 6, **characterised in that** several adjacent baffles (426ᵢ) have heights, measured perpendicular to the longitudinal direction of the bodies, that are non-zero and are different.

12. The injection device (10) according to claim 11, **characterised in that**, along the longitudinal direction of the body, the heights of adjacent baffles (426ᵢ) increase until they reach a maximum and then decrease.

13. The injection device (10) according to any one of claims 1 to 12, **characterised in that** said at least one baffle (26"ᵢ) has, on the side of the inlet openings, a curved face arranged to direct a fluid that impacts the face towards the inside of the body.

14. The injection device (10) according to claim 13, **characterised in that** a plurality of baffles having a curved face are arranged with respect to one another in order to impart to the fluid impacting on their curved face the same rotational movement around an axis parallel to the longitudinal direction of the body.

15. The injection device (10) according to any one of claims 1 to 14, **characterised in that** the baffle(s) (26ᵢ, 26'ᵢ, 26"ᵢ, 26"'ᵢ, 126ᵢ, 126'ᵢ, 226ᵢ, 326ᵢ, 326'ᵢ, 426ᵢ, 526ᵢ) have a height, measured perpendicularly to the longitudinal direction of the body, equal to at most 1/8^{th} of this maximum internal dimension.
